# EUROPEAN PATENT APPLICATION

(11) **EP 3 499 065 A1**
(43) Date of publication of application: **19.06.2019**
(21) Application number: 17841468.6
(22) Date of filing: 10.08.2017
(51) Int. Cl.: F16C 33/66, B23B 19/02, F16C 19/16, F16C 19/54, F16N 7/32, F16N 31/00, B23Q 11/12

(54) **BEARING DEVICE, AND SPINDLE DEVICE FOR MACHINE TOOL**

(30) Priority: 15.08.2016 JP 2016159261
(71) Applicant: NSK Ltd., Tokyo 141-8560 (JP)
(72) Inventor: MATSUNAGA, Kyohei, Fujisawa-shi Kanagawa 251-8501 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2017/029161
(87) International publication number: WO 2018/034245

(57) **Abstract**

Provided is a bearing device (1) wherein an outer ring (12) of an angular contact ball bearing (10) has at least one supply hole (15) for supplying a lubricating oil, and an outer ring spacer (30) comprises, on the inner peripheral surface thereof, a tapered surface (32) which increases in diameter with the distance from an axial end surface (31) contacting the outer ring (12), the outer ring spacer (30) also comprising a discharge hole (34) which passes therethrough in the radial direction and through which the lubricating oil is discharged. Further, the inner diameter dimension (D₃₁) of the axial end surface (31) of the outer ring spacer (30) is set to be equal to or larger than the inner diameter dimension (D₁₂ₑ) of an axial other side end surface (12e) of the outer ring (12) contacting the outer ring spacer (30).

## Description

### TECHNICAL FIELD

The present invention relates to a bearing device, and a spindle device for machine tool, and more specifically, to a bearing device using an outer ring oil supply-type ball bearing, and a spindle device for machine tool.

### RELATED ART

In recent years, requests for a high speed spindle for machine tool increase so as to improve cutting efficiency. Also, recently, needs to apply the spindle to a five-axis processing machine capable of processing a member to be processed having a complex shape without using a plurality of machine tools and without setup change increase so as to increase production efficiency.

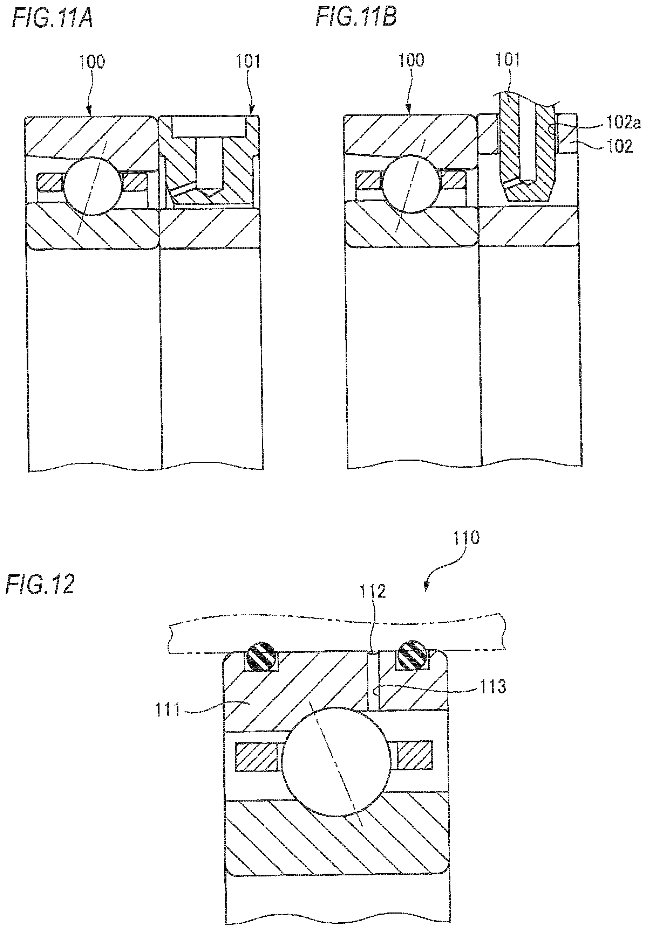

As a lubrication method that is adopted for a rolling bearing of a spindle for machine tool, grease lubrication, oil/air lubrication, oil/mist lubrication and the like may be exemplified. In general, the oil/air lubrication is adopted in a region of high-speed rotation (dmn value: 800,000 or higher). As the oil/air lubrication of the related art, a type where high-pressure air and fine oil particles are supplied from a bearing side surface into a bearing by using a nozzle piece for oil supply 101 arranged at a side of a bearing 100 shown in FIG. 11A or a nozzle piece for oil supply 101 inserted in a radial through-hole 102a of an outer ring spacer 102 arranged at a side of a bearing 100 shown in FIG. 11B has been known.

In the above type, it is necessary to separately provide the component for oil supply such as the nozzle piece 101, so that the number of components of the spindle increases. Accordingly, the cost of the spindle increases as a whole and labor for management also increases. Also, since the nozzle piece 101 is used, a shape of an outer ring spacer and a structure of a housing are complicated, so that labor for design/processing of the spindle increases. Also, by an air curtain generated in association with the high-speed rotation (the air curtain means a wall of a circumferential high-speed air stream generated due to friction between the air and an outer-diameter surface of an inner ring being rotating at high speed), the supply of oil particles from the nozzle for oil supply is disturbed, so that the lubricating oil is difficult to be securely supplied into the bearing. Like this, the oil/air lubrication of the related art has higher lubricity under high-speed rotation than the grease lubrication. However, as the speed increases, it is important to cope with the speed-up.

Also, as the other oil/air lubrication type, as shown in FIG. 12, an outer ring oil supply-type bearing 110 where a circumferential oil groove 112 is formed in an outer peripheral surface of an outer ring 111 and a radial oil hole 113 is formed at the same axial position as the oil groove 112 is used (for example, refer to Patent Document 1). In the outer ring oil supply-type bearing, even when the bearing is used for high-speed rotation, the supply of oil particles is not disturbed by the air curtain. For this reason, it is possible to stably use the spindle even during the high-speed rotation.

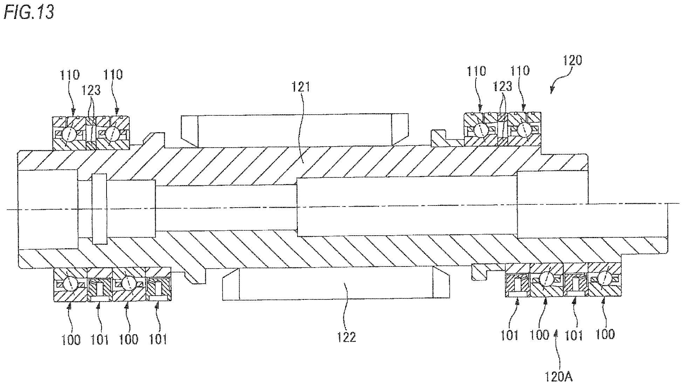

FIG. 13 is a schematic view of spindles in each of cases where the oil/air lubrication using the nozzle piece 101 is performed and the oil/air lubrication of an outer ring oil supply specification is performed. In FIG. 13, the upper half shows a spindle 120 where the oil/air lubrication of the outer ring oil supply specification is performed, and the lower half shows a spindle 120A where the oil/air lubrication using the nozzle piece 101 is performed. Meanwhile, in FIG. 13, a reference numeral 121 indicates a rotary shaft, and a reference numeral 122 indicates a rotor of a motor to be fitted to the rotary shaft 121. Like this, in the case of the oil/air lubrication using the nozzle piece 101, a spacer having a predetermined axial length or longer is required so as to supply the lubricating oil from a side surface of the bearing 100. In contrast, in the case of the outer ring oil supply specification, it is not necessary to provide a spacer for oil supply, so that it is possible to omit the nozzle piece and to simplify the structure of the spacer. Like this, the outer ring oil supply-type bearing has many merits, as compared to the side surface oil supply-type bearing of the related art, and can achieve particularly the effects in a high-speed rotation region in which the lubrication situation of the bearing becomes strict.

Also, while the outer ring oil supply-type bearing can directly supply the lubricating oil into the bearing, there is a possibility that the lubricating oil more than an amount for lubrication will stay in the bearing unless an oil discharge structure of the lubricating oil is securely examined. Particularly, in the high-speed rotation region, if a large amount of the lubricating oil exists in the bearing, a stirring resistance against the lubricating oil, which is generated during rotation of the bearing, is likely to increase. Therefore, it is necessary to examine an oil discharge structure with which the lubricating oil supplied into the bearing can be efficiently discharged.

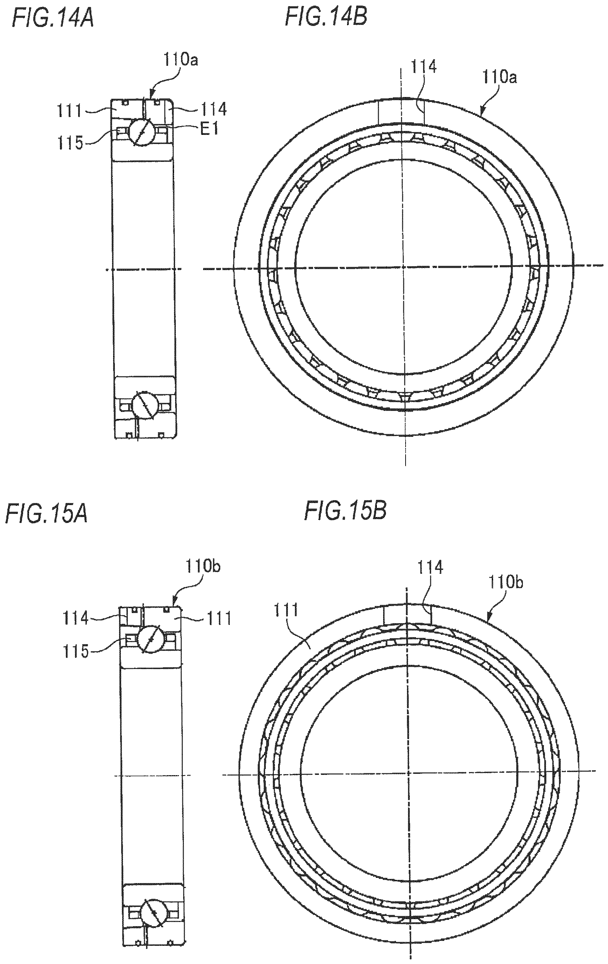

To this end, an outer ring oil supply-type bearing has been known in which an end face of an outer ring of the bearing is provided with a cutout and an oil discharge structure is thus provided to the outer ring oil supply-type bearing (for example, refer to Patent Document 2). For example, outer ring oil supply-type bearings 110a, 110b having an oil discharge structure shown in FIGS. 14 and 15 have a cutout for oil discharge 114 provided at a part of an end face of an outer ring 111. In the meantime, FIG. 14 depicts an example where the cutout 114 is formed at an outer ring end face of a counterbore-opposite-side, and FIG. 15 depicts an example where the cutout 114 is formed at an outer ring end face of a counterbore-side.

### Citation List

### Patent Documents

Patent Document 1: JP-A-2013-79711
Patent Document 2: JP-A-2013-15152

### SUMMARY OF INVENTION

### Problems To Be Solved By Invention

In the meantime, as shown in FIG. 14, a bearing of which a cage 115 has an outer ring guide specification (a specification in which an inner diameter surface of the outer ring 111 is designed to restrain movement of the cage 115 in a radial direction of the bearing) may be used. In the bearing, when the outer ring 111 is provided with the cutout 114, an edge E1 that is formed by an inner diameter surface of the outer ring 111 and a surface of the cutout 114 perpendicular to a direction of a rotary shaft of the bearing contacts an outer diameter surface of the cage 115 during rotation of the bearing, depending on an axial depth of the cutout 114, so that the outer diameter surface of the cage 115 may be worn.

Particularly, in the bearing of which the cage 115 has the outer ring guide specification, in a high-speed rotation region in which a centrifugal force to be applied to the cage 115 increases, the momentum of the cage 115, which is generated when the outer diameter surface of the cage and the inner diameter surface of the outer ring collide with each other, increases, as compared to a low-speed rotation region. Therefore, it is assumed that upon collision with the edge E1, a possibility that the outer diameter surface of the cage 115 will be worn increases and a degree of the wear also increases. Also, when the axial depth of the cutout 114 provided to the outer ring 111 is reduced so as to prevent the collision between the edge E1 and the outer diameter surface of the cage 115, a space for discharging the lubricating oil is reduced, so that it is difficult to efficiently discharge the lubricating oil. As a result, in the high-speed rotation region, the abnormal temperature rise, the early seizure, the power loss and the like may be caused.

Also, depending on the designs of the bearing such as a design where a size of the bearing is small and a design where a provision position of an O-ring in the direction of the rotary shaft is set to be close to an end face of the outer ring, it is not possible to sufficiently secure the axial depth of the cutout 114, so that the oil may not be efficiently discharged. For this reason, it is not possible to make a design as shown in FIG. 15 where the cutout 114 is provided on the counterbore-side end face of the outer ring 111.

The present invention has been made in view of the above situations, and an object thereof is to provide a bearing device, and a spindle device for machine tool capable of efficiently discharging lubricating oil supplied into a bearing from a supply hole formed in an outer ring without concern about wear of a cage, and achieving stable bearing performance in a high-speed rotation region.

### Means for Solving Problems

The object of the present invention is accomplished by following configurations.
(1) A bearing device comprising:
   a rolling bearing comprising: an inner ring having an inner ring raceway groove formed in an outer peripheral surface; an outer ring having an outer ring raceway groove formed in an inner peripheral surface and a counterbore formed at one axial side of the outer ring raceway groove; and a plurality of rolling elements arranged rollably between the inner ring raceway groove and the outer ring raceway groove, wherein the outer ring has at least one supply hole which penetrates from an outer peripheral surface thereof to the inner peripheral surface thereof in a radial direction and which is configured to supply lubricating oil, and wherein the rolling bearing is lubricated by the lubricating oil; and
   a counterbore-opposite-side peripheral component which is arranged adjacent to the outer ring at a counterbore-opposite-side, wherein the counterbore-opposite-side is the other axial side of the outer ring raceway groove,
   wherein the counterbore-opposite-side peripheral component comprises:
      a tapered surface which is formed on an inner peripheral surface thereof and which has a diameter increasing with a distance from an axial end face thereof in contact with the outer ring; and
      a discharge hole which penetrates therethrough in the radial direction and which is configured to discharge the lubricating oil, and
   wherein an inner diameter dimension of the axial end face of the counterbore-opposite-side peripheral component is equal to or larger than an inner diameter dimension of the other axial end face of the outer ring in contact with the counterbore-opposite-side peripheral component.
(2) The bearing device according to the above (1),
   wherein the inner peripheral surface of the outer ring has a groove shoulder formed at the other axial side of the outer ring raceway groove, and
   wherein the inner diameter dimension of the other axial end face of the outer ring is defined by a uniform inner diameter dimension of the groove shoulder.
(3) The bearing device according to the above (1) or (2), further comprising an inner ring-side peripheral component which is arranged to be adjacent to the inner ring at the other axial side,
   wherein the inner ring-side peripheral component has a tapered surface which faces the tapered surface of the counterbore-opposite-side peripheral component and which forms a labyrinth between the tapered surface and the tapered inner peripheral surface.
(4) The bearing device according to any one of the above (1) to (3), further comprising a counterbore-side peripheral component which is arranged to be adjacent to the outer ring at a counterbore-side,
   wherein the counterbore has an inclined surface of which a diameter gradually increases toward one axial end face of the outer ring,
   wherein the counterbore-side peripheral component has a cutout which is formed in the radial direction at an axial end face in contact with the outer ring, and
   wherein an inner diameter dimension of the axial end face of the counterbore-side peripheral component is equal to or larger than an inner diameter dimension of the one axial end face of the outer ring in contact with the counterbore-side peripheral component.
(5) A bearing device comprising:
   a rolling bearing comprising: an inner ring having an inner ring raceway groove formed in an outer peripheral surface; an outer ring having an outer ring raceway groove formed in an inner peripheral surface and a counterbore formed at one axial side of the outer ring raceway groove; and a plurality of rolling elements arranged rollably between the inner ring raceway groove and the outer ring raceway groove, wherein the outer ring has at least one supply hole which penetrates from an outer peripheral surface thereof to the inner peripheral surface thereof in a radial direction and which is configured to supply lubricating oil, and wherein the rolling bearing is lubricated by the lubricating oil; and
   a counterbore-side peripheral component which is arranged to be adjacent to the outer ring at a counterbore-side,
   wherein the counterbore has an inclined surface of which a diameter gradually increases toward one axial end face of the outer ring,
   wherein the counterbore-side peripheral component has a cutout which is formed in the radial direction at an axial end face in contact with the outer ring, and
   wherein an inner diameter dimension of the axial end face of the counterbore-side peripheral component is equal to or larger than an inner diameter dimension of the one axial end face of the outer ring in contact with the counterbore-side peripheral component.
(6) A spindle device for machine tool comprising the bearing device according to any one of the above (1) to (5).

In the meantime, the "axial direction" of the outer ring, the inner ring, the counterbore-side peripheral component and the counterbore-opposite-side peripheral component indicates a direction of a rotary shaft of the rolling bearing.

### Effects of Invention

According to the bearing device of the present invention, the outer ring has at least one supply hole configured to supply the lubricating oil, and the counterbore-opposite-side peripheral component arranged to be adjacent to the outer ring at the counterbore-opposite-side that is the other axial side of the outer ring raceway groove has the tapered surface formed on the inner peripheral surface thereof and having the diameter increasing with the distance from the axial end face in contact with the outer ring, and has the discharge hole penetrating therethrough in the radial direction and configured to discharge the lubricating oil. Also, the inner diameter dimension of the axial end face of the counterbore-opposite-side peripheral component is set equal to or larger than the inner diameter dimension of the other axial end face of the outer ring in contact with the counterbore-opposite-side peripheral component. Thereby, it is possible to efficiently discharge the lubricating oil supplied into the bearing from the supply hole formed in the outer ring without concern about wear of a cage, and to achieve stable bearing performance in a high-speed rotation region.

Also, according to the bearing device of the present invention, the outer ring has at least one supply hole configured to supply the lubricating oil, and the counterbore of the outer ring has the inclined surface of which the diameter gradually increases toward one axial end face of the outer ring. The counterbore-side peripheral component arranged to be adjacent to the outer ring at the counterbore-side has the cutout formed in the radial direction at the axial end face in contact with the outer ring. Also, the inner diameter dimension of the axial end face of the counterbore-side peripheral component is set equal to or larger than the inner diameter dimension of one axial end face of the outer ring in contact with the counterbore-side peripheral component. Thereby, it is possible to efficiently discharge the lubricating oil supplied into the bearing from the supply hole formed in the outer ring without concern about wear of a cage, and to achieve stable bearing performance in a high-speed rotation region.

### BRIEF DESCRIPTION OF DRAWINGS

FIG. 1 is a sectional view depicting a bearing device in accordance with a first embodiment of the present invention.
FIG. 2 is a sectional view depicting a bearing device in accordance with a first modified embodiment of the first embodiment of the present invention.
FIG. 3 is a sectional view depicting a bearing device in accordance with a second modified embodiment of the first embodiment of the present invention.
FIG. 4 is a sectional view depicting a bearing device in accordance with a third modified embodiment of the first embodiment of the present invention.
FIG. 5 is a sectional view depicting a bearing device in accordance with a fourth modified embodiment of the first embodiment of the present invention.
FIG. 6 depicts a bearing device in accordance with a second embodiment of the present invention.
FIG. 7 is a sectional view depicting a bearing device in accordance with a first modified embodiment of the second embodiment of the present invention.
FIG. 8 is a sectional view depicting a bearing device in accordance with a second modified embodiment of the second embodiment of the present invention.
FIG. 9 is a sectional view depicting a bearing device in accordance with a third modified embodiment of the second embodiment of the present invention.
FIG. 10 is a sectional view depicting a bearing device in accordance with a modified embodiment of the present invention.
FIGS. 11A and 11B are sectional views depicting oil/air lubrication of the related art in which a nozzle piece is used.
FIG. 12 is a sectional view of a ball bearing of oil/air lubrication of an outer ring oil supply specification.
FIG. 13 is a sectional view depicting a spindle where oil/air lubrication of an outer ring oil supply specification is performed (upper half) and is a sectional view depicting a spindle where oil/air lubrication using a nozzle piece is performed (lower half).
FIG. 14A is a sectional view depicting a ball bearing of the outer ring oil supply specification having an oil discharge structure in accordance with the related art, and FIG. 14B is a side view thereof.
FIG. 15A is a sectional view depicting a ball bearing of the outer ring oil supply specification having another oil discharge structure in accordance with the related art, and FIG. 15B is a side view thereof.

### DETAILED DESCRIPTION OF PREFERRED EMBODIMENTS

Hereinafter, a bearing device and a spindle device for machine tool in accordance with each embodiment of the present invention will be described in detail with reference to the drawings.

### (First Embodiment)

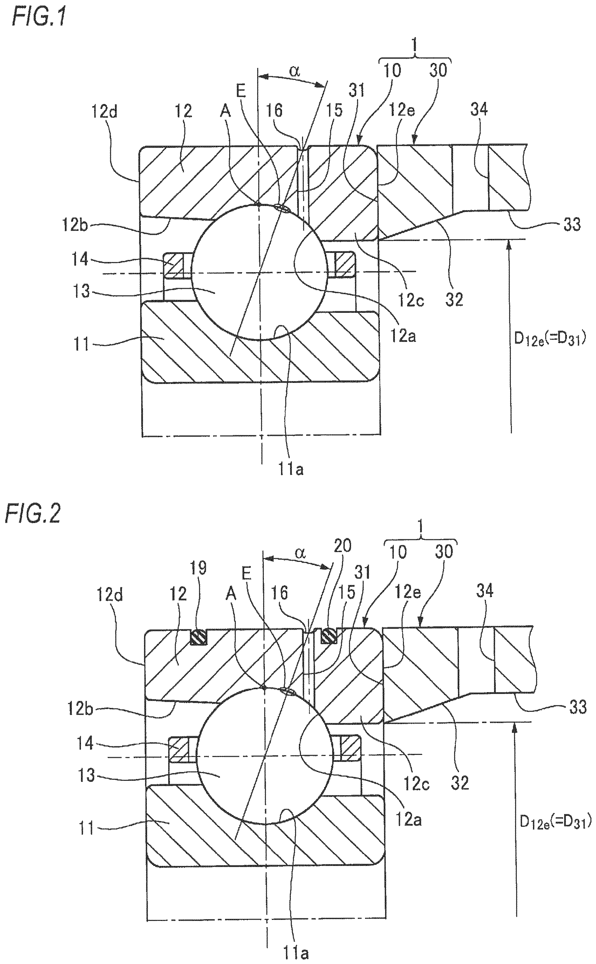

As shown in FIG. 1, a bearing device 1 in accordance with a first embodiment can be applied to a spindle device for machine tool, and includes at least an angular ball bearing (rolling bearing) 10, and an outer ring spacer (counterbore-opposite-side peripheral component) 30.

The angular ball bearing 10 includes an inner ring 11 having a circular arc-shaped inner ring raceway groove 11a formed in an outer peripheral surface, an outer ring 12 having a circular arc-shaped outer ring raceway groove 12a formed in an inner peripheral surface, a plurality of balls (rolling elements) 13 each of which has a predetermined contact angle α and is arranged rollably between the inner ring raceway groove 11a and the outer ring raceway groove 12a, and a cage 14 configured to keep the plurality of balls 13. An inner peripheral surface of one axial side of the outer ring 12 is formed with a counterbore 12b, and an inner peripheral surface of the other axial side is formed with a groove shoulder 12c. The counterbore 12b has an inclined surface of which a diameter gradually increases toward one axial end face 12d of the outer ring 12. Also, the groove shoulder 12c has a uniform inner diameter dimension from a boundary position with the outer ring raceway groove 12a of the outer ring 12 to the other axial end face 12e of the outer ring. The cage 14 is an outer ring guide type, and specifically, is guided by an inner peripheral surface of the groove shoulder 12c of the outer ring 12.

The angular ball bearing 10 is an outer ring oil supply-type bearing, and the outer ring 12 has a supply hole 15 penetrating from the outer peripheral surface to the inner peripheral surface in a radial direction. Also, the outer peripheral surface of the outer ring 12 is formed with a concave groove 16 which is formed along a circumferential direction and which is configured to communicate with the supply hole 15. Thereby, in the angular ball bearing 10, oil particles and lubricating air supplied from an oil supply passage of a housing (not shown) are directly supplied to the ball 13 through the concave groove 16 and the supply hole 15 of the outer ring 12, so that the oil/air lubrication is performed.

On the other hand, instead of the configuration where the outer ring 12 is formed with the circumferential concave groove, the circumferential concave groove may be formed at a position of an opening of the oil supply passage that is formed in an inner peripheral surface of the housing and is configured to communicate with the supply hole 15.

Also, in the first embodiment, an inner diameter-side opening of the supply hole 15 is provided in an inner peripheral surface of a contact angle-side with respect to a groove bottom position A of the outer ring 12.

In particular, from a standpoint of lubricity during rotation of the bearing, the inner diameter-side opening of the supply hole 15 is preferably provided in the outer ring raceway groove 12a.

Also, from a standpoint of suppressing an increase in contact surface pressure at contact positions of the inner and outer rings 11, 12 and the ball 13, the inner diameter-side opening of the supply hole 15 is set to a position spaced from a contact ellipse E between the ball 13 and the outer ring raceway groove 12a. The contact ellipse E means a contact ellipse that is to be generated only by an initial preload, more preferably a contact ellipse that is to be generated by a bearing internal load including an external load to be generated when processing a member to be processed.

Meanwhile, in the first embodiment, the diameter of the supply hole 15 is set to 0.5 to 1.5mm, considering the supply ability of the lubricating oil and the interference prevention with the contact ellipse E. Also, in the first embodiment, the supply hole 15 has a uniform diameter in the radial direction.

Also, the outer ring spacer 30 is arranged to be adjacent to the outer ring 12 at the counterbore-opposite-side. Also, an inner diameter dimension D₃₁ of an axial end face 31 of the outer ring spacer 30 is set to be the same as an inner diameter dimension D₁₂ₑ of the other axial end face 12e of the outer ring 12 in contact with the outer ring spacer 30.

An inner peripheral surface of the outer ring spacer 30 has a tapered surface 32 of which a diameter increases with a distance from the axial end face 31 in contact with the outer ring 12, and a cylindrical surface 33 extending from a larger diameter-side end portion of the tapered surface 32.

Also, the outer ring spacer 30 has a discharge hole 34 penetrating therethrough in the radial direction and configured to discharge the lubricating oil. In the first embodiment, the discharge hole 34 is formed over the tapered surface 32 and the cylindrical surface 33. However, the present invention is not limited thereto. For example, the discharge hole 34 may be provided in a part of the tapered surface 32.

In the meantime, the supply hole 15 of the outer ring 12 and the discharge hole 34 of the outer ring spacer 30 are shown with the same phase for convenience of illustration. However, the present invention is not limited thereto.

According to the bearing device 1 configured as described above, the inner peripheral surface of the outer ring spacer 30 is configured by the tapered surface 32, and the discharge hole 34 is provided on the tapered surface 32, so that the lubricating oil delivered to the outer ring by the centrifugal force is efficiently discharged to an outside. That is, during the high-speed rotation, a circumferential high-speed stream is generated in the bearing by the revolution of the ball 13 and the cage 14, so that the lubricating oil flows in the circumferential direction with being attached to the inner peripheral surface of the outer ring 12. Due to the phenomenon, the inner peripheral surface of the outer ring spacer 30 is configured by the tapered surface 32 of which a diameter is larger at the discharge hole 34-side, so that it is possible to guide the lubricating oil to the discharge hole 34 while spirally rotating the same along the tapered surface 32.

Also, in the rolling bearing 10 for a machine tool spindle, in order to implement favorable bearing performance in a high-speed rotation region, it is important to efficiently discharge the lubricating oil supplied into the bearing and to extremely suppress heat generation and the like caused due to the lubricating oil staying in the bearing. As described above, the outer ring spacer 30 is provided with the oil discharge structure of the first embodiment, so that it is possible to solve a collision problem between an outer diameter surface of the cage 14 and a cutout edge, and to efficiently discharge the lubricating oil supplied into the bearing from the supply hole 15 formed in the outer ring 12, thereby achieving the stable bearing performance in the high-speed rotation region.

Meanwhile, in the first embodiment, like a first modified embodiment shown in FIG. 2, the outer peripheral surface of the outer ring 12 is formed with annular grooves 19 along the circumferential direction at both axial sides with the concave groove 16 being interposed therebetween , and a seal member 20, which is an annular elastic member such as an O-ring, is arranged in each of the annular grooves 19, so that it is possible to prevent the oil leakage.

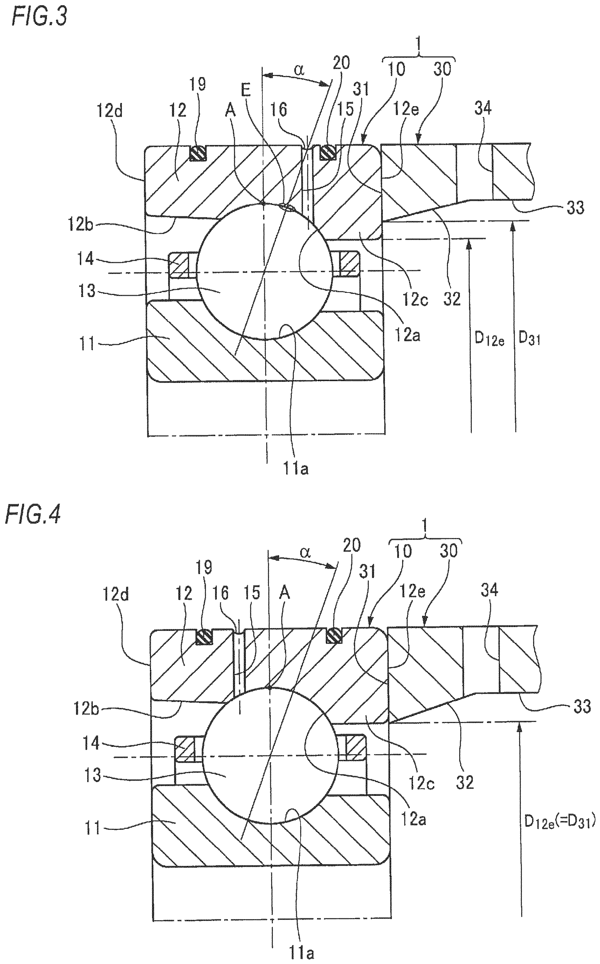

Also, in the first embodiment, the inner diameter dimension D₃₁ of the axial end face 31 of the outer ring spacer 30 may be set equal to or larger than the inner diameter dimension D₁₂ₑ of the other axial end face 12e of the outer ring 12 in contact with the outer ring spacer 30, and may be the same, like the first embodiment. On the other hand, like a second modified embodiment shown in FIG. 3, the inner diameter dimension D₃₁ of the axial end face 31 of the outer ring spacer 30 may be designed to be larger than the inner diameter dimension D₁₂ₑ of the other axial end face 12e of the outer ring 12 in contact with the outer ring spacer 30.

Also, in the first embodiment, the inner diameter-side opening of the supply hole 15 is preferably provided in the inner peripheral surface of the contact angle-side with respect to the groove bottom position A of the outer ring 12 so as to be adjacent to the outer ring spacer 30 having the discharge hole 34. On the other hand, like a third modified embodiment shown in FIG. 4, the inner diameter-side opening of the supply hole 15 may be provided in an inner peripheral surface of a contact angle-opposite-side with respect to the groove bottom position A of the outer ring 12.

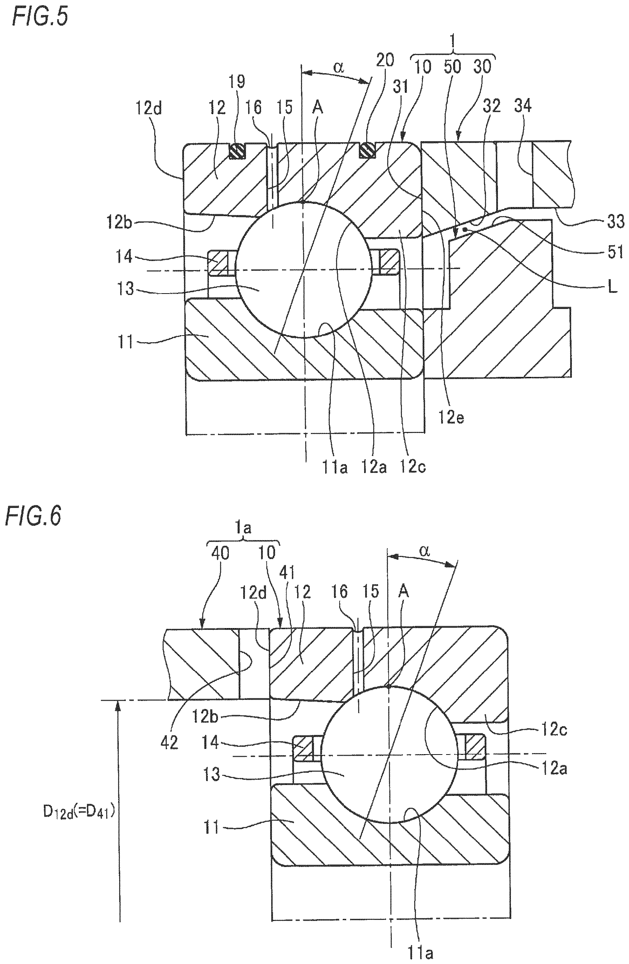

Also, like a fourth modified embodiment shown in FIG. 5, the bearing device 1 further includes an inner ring spacer 50 (an inner ring-side peripheral component) arranged to be adjacent to the inner ring 11 at the other axial side (a counterbore-opposite-side of the outer ring 12). The inner ring spacer 50 has a tapered outer peripheral surface 51 that faces the tapered surface 32 of the outer ring spacer 30 and forms a labyrinth L between the tapered outer peripheral surface 51 and the tapered surface 32.

Thereby, the labyrinth L is formed between the inner peripheral surface of the outer ring spacer 30 and the outer peripheral surface of the inner ring spacer 50, and when the tapered outer peripheral surface 51 of the inner ring spacer 50 generates a peripheral speed difference in the direction of the rotary shaft of the bearing 10, a pressure difference is correspondingly generated in the labyrinth L and an air flow toward the discharge hole 34 is generated, so that the oil discharge ability is improved. In the meantime, the tapered outer peripheral surface 51 of the inner ring spacer 50 is formed at a position spaced from an axial end face in contact with the inner ring 11.

Meanwhile, in the second to fourth modified embodiments shown in FIGS. 3 to 5, the seal members 20 are arranged on the outer peripheral surface of the outer ring 12. However, like FIG. 1, the seal member may not be provided.

### (Second Embodiment)

Subsequently, a bearing device of a second embodiment is described with reference to FIG. 6. In the second embodiment, the position of the supply hole 15 and the configuration of the outer ring spacer are different from the first embodiment shown in FIG. 1. The other configurations are the same as the first embodiment, and the parts, which are the same as or equivalent to the first embodiment, are denoted with the same reference numerals, and the descriptions thereof are omitted or simplified.

As shown in FIG. 6, a bearing device 1a in accordance with the second embodiment can be applied to a spindle device for machine tool, and includes at least the angular ball bearing (rolling bearing) 10, and an outer ring spacer (counterbore-side peripheral component) 40.

In the angular ball bearing 10 of the second embodiment, like the third modified embodiment of the first embodiment, the inner diameter-side opening of the supply hole 15 is provided in the inner peripheral surface of the contact angle-opposite-side with respect to the groove bottom position A of the outer ring 12.

In particular, from the lubricity during the rotation of the bearing, the inner diameter-side opening of the supply hole 15 is preferably provided in the outer ring raceway groove 12a.

The outer ring spacer 40 is arranged to be adjacent to the outer ring 12 at the counterbore-side. An inner diameter dimension D₄₁ of an axial end face 41 of the outer ring spacer 40 is designed to be the same as an inner diameter dimension D_{12d} of one axial end face 12d of the outer ring 12 in contact with the outer ring spacer 40.

Also, the outer ring spacer 40 has a cutout for discharge 42 formed in the radial direction at the axial end face 41 in contact with the outer ring 12.

In the meantime, the supply hole 15 of the outer ring 12 and the cutout for discharge 42 of the outer ring spacer 40 are shown with the same phase for convenience of illustration. However, the present invention is not limited thereto.

Thereby, in the bearing device 1a of the second embodiment, during the high-speed rotation, a circumferential high-speed stream is generated in the bearing by the revolution of the ball 13 and the cage 14, so that the lubricating oil flows in the circumferential direction with being attached to the inner peripheral surface of the outer ring 12. Due to the phenomenon, it is possible to guide the lubricating oil to the cutout for discharge 42 while spirally rotating the same along the counterbore 12b, which is the inclined surface.

Also, in the second embodiment, since the counterbore 12b of the outer ring 12 is configured by the inclined surface, it is not necessary to provide the inner peripheral surface of the outer ring spacer 40 with a tapered surface, and the cutout for discharge 42 is provided at the axial end face 41 of the outer ring spacer 40, i.e., at a part in contact with the outer ring 12 in the direction of the rotary shaft of the bearing, so that it is possible to efficiently discharge the oil. Therefore, the outer ring spacer 40 is preferably formed to have a ring shape of a uniform height.

The other configurations and operations are the same as the first embodiment.

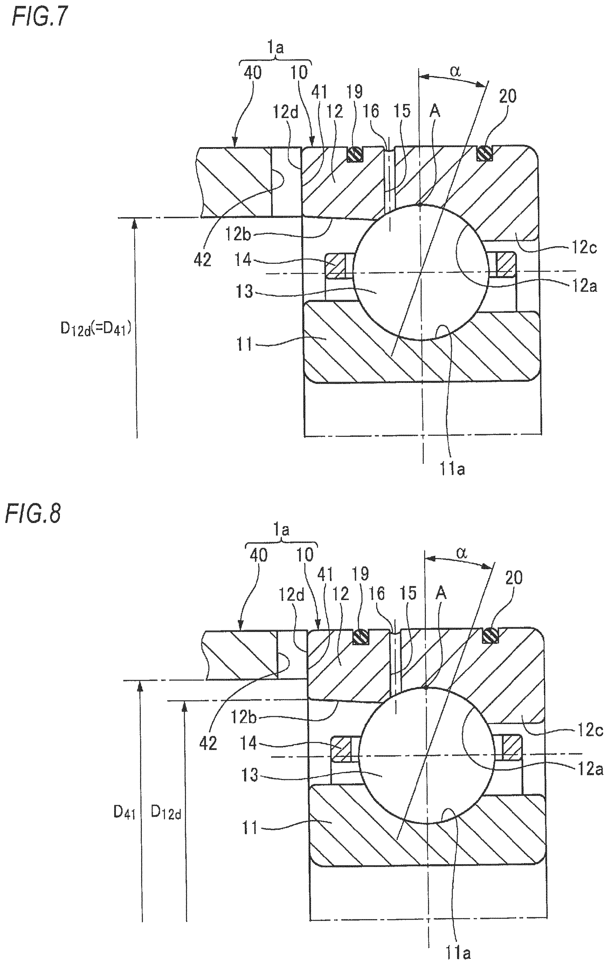

Meanwhile, in the second embodiment, like a first modified embodiment shown in FIG. 7, the outer peripheral surface of the outer ring 12 is formed with annular grooves 19 at both axial sides with the concave groove 16 being interposed therebetween along the circumferential direction, and a seal member 20, which is an annular elastic member such as an O-ring, is arranged in each of the annular grooves 19, so that it is possible to prevent the oil leakage.

Also, in the second embodiment, the inner diameter dimension D₄₁ of the axial end face 41 of the outer ring spacer 40 may be set equal to or larger than the inner diameter dimension D_{12d} of one axial end face 12d of the outer ring 12 in contact with the outer ring spacer 40, and may be the same, like the second embodiment. On the other hand, like a second modified embodiment shown in FIG. 8, the inner diameter dimension D₄₁ of the axial end face 41 of the outer ring spacer 40 may be designed to be larger than the inner diameter dimension D_{12d} of one axial end face 12d of the outer ring 12 in contact with the outer ring spacer 40.

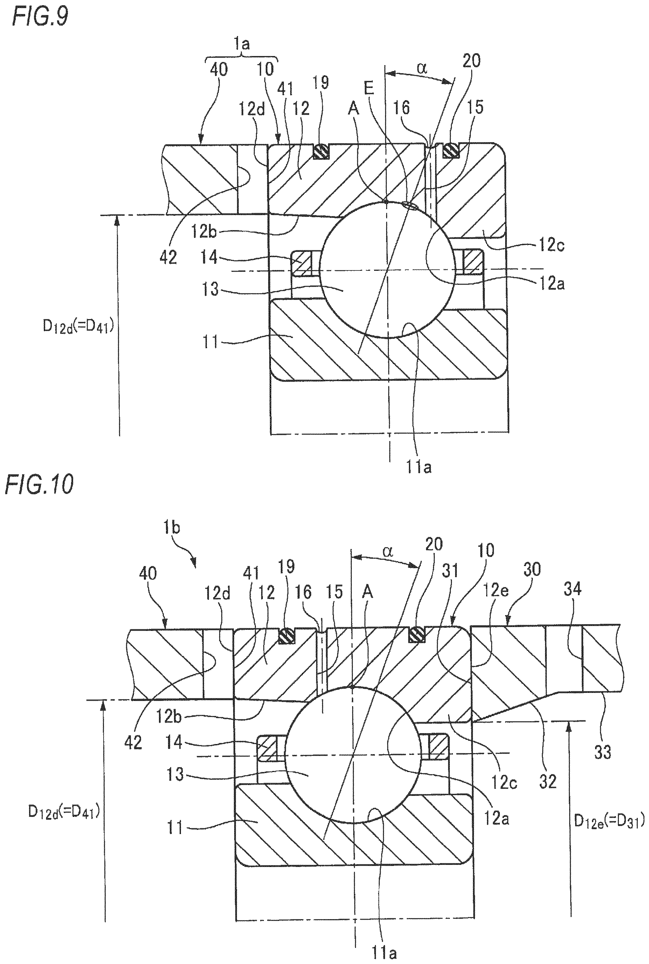

Also, in the second embodiment, the inner diameter-side opening of the supply hole 15 is preferably provided in the inner peripheral surface of the contact angle-opposite-side with respect to the groove bottom position A of the outer ring 12 so as to be adjacent to the outer ring spacer 30 having the discharge hole 34. On the other hand, like a third modified embodiment shown in FIG. 9, the inner diameter-side opening of the supply hole 15 may be provided in the inner peripheral surface of the contact angle- side with respect to the groove bottom position A of the outer ring 12. Also in this case, the inner diameter-side opening of the supply hole 15 is set to a position spaced from the contact ellipse E between the ball 13 and the outer ring raceway groove 12a.

In the second and third modified embodiments shown in FIGS. 8 and 9, the seal members 20 are arranged on the outer peripheral surface of the outer ring 12. However, like FIG. 6, the seal member may not be provided.

In the meantime, the present invention is not limited to the above embodiments, and can be appropriately modified and changed.

For example, like a modified embodiment shown in FIG. 10, the outer ring spacer 30 of the first embodiment and the outer ring spacer 40 of the second embodiment may be applied to a bearing device 1b at the same time. Thereby, it is possible to further improve the oil discharge ability, so that it is possible to achieve the more stable bearing performance in the high-speed rotation region.

Also, the supply hole may be any supply hole penetrating the outer ring from the outer peripheral surface to the inner peripheral surface in the radial direction, and may be inclined in the direction of the rotary shaft or the circumferential direction of the bearing, in addition to the second embodiment where it is formed in the radial direction (parallel with a plane taken along the radial direction).

Also, in the above embodiments, the outer ring 12 has one supply hole. However, the present invention is not limited thereto. For example, the outer ring may have a plurality of supply holes.

Also, the discharge hole 34 and the cutout for discharge 42 may be provided in plural in the circumferential direction, respectively.

In the meantime, as the method of supply the lubricating oil into the supply hole of the outer ring, oil/mist lubrication may be adopted, in addition to the oil/air lubrication. Oil/jet lubrication may also be adopted, depending on situations. However, in a grease supply method of supplying grease from the supply hole 15 of the outer ring 12 by using a lubricant supply device provided around the bearing or outside the spindle, if the supply hole 15 is formed to open toward an inside of the outer ring raceway groove 12a, the semisolid grease containing thickener is supplied into the outer ring raceway groove 12a.

In this case, since the grease is caught into the outer ring raceway groove 12a, the problems such as increase in torque and abnormal heat generation are generated due to stirring resistance. Particularly, the problems are more likely to be generated during the high-speed rotation, like the second embodiment. Therefore, the oil lubrication method of supplying the lubricating oil, which does not contain the thickener, is preferable in the present invention.

Also, the ball bearing of the present invention is not limited to the spindle device for machine tool and can be applied as a ball bearing of a general industrial machine and a high-speed rotating device such as a motor, too.

Also, the inner peripheral surface of one axial end face of the outer ring and the inner peripheral surface of the other axial end face may be chamfered. In this case, the inner diameter dimensions of the axial end faces of the counterbore-opposite-side peripheral component and the counterbore-side peripheral component in contact with the outer ring may be set, considering the chamfering dimensions.

That is, when the inner diameter dimension of the axial end face of each peripheral component is set equal to or larger than the inner diameter dimension of the axial end face of the outer ring, except the chamfering dimension, the lubricating oil discharged from the inside of the bearing does not stay in a concave part formed between the chamfered part of the outer ring and each peripheral component, so that it is possible to achieve the more excellent discharge effect.

In the meantime, the discharge hole 34 or the cutout for discharge 42 may be provided at a lower part in a gravity direction, so that the lubricating oil may be discharged from a discharge passage of a housing (not shown) in communication with the same or the lubricating oil may be discharged by an external suction device (not shown).

The subject application is based on Japanese Patent Application No. 2016-159261 filed on August 15, 2016, the contents of which are incorporated herein by reference.

### Description of Reference Numerals

1, 1a, 1b: bearing device
10: angular ball bearing (rolling bearing)
11: inner ring
11a: inner ring raceway groove
12: outer ring
12a: outer ring raceway groove
12b: counterbore
12c: groove shoulder
13: ball (rolling element)
14: cage
15: supply hole
16: concave groove
30: outer ring spacer (counterbore-opposite-side peripheral component)
32: tapered surface
34: discharge hole
40: outer ring spacer (counterbore-side peripheral component)
42: cutout for discharge (cutout)
E: contact ellipse

## Claims

1. A bearing device comprising:
a rolling bearing comprising :an inner ring having an inner ring raceway groove formed in an outer peripheral surface; an outer ring having an outer ring raceway groove formed in an inner peripheral surface and a counterbore formed at one axial side of the outer ring raceway groove; and a plurality of rolling elements arranged rollably between the inner ring raceway groove and the outer ring raceway groove, wherein the outer ring has at least one supply hole which penetrates from an outer peripheral surface thereof to the inner peripheral surface thereof in a radial direction and which is configured to supply lubricating oil, and wherein the rolling bearing is lubricated by the lubricating oil; and
a counterbore-opposite-side peripheral component which is arranged adjacent to the outer ring at a counterbore-opposite-side, wherein the counterbore-opposite-side is the other axial side of the outer ring raceway groove,
wherein the counterbore-opposite-side peripheral component comprises:
a tapered surface which is formed on an inner peripheral surface thereof and which has a diameter increasing with a distance from an axial end face thereof in contact with the outer ring; and
a discharge hole which penetrates therethrough in the radial direction and which is configured to discharge the lubricating oil, and
wherein an inner diameter dimension of the axial end face of the counterbore-opposite-side peripheral component is equal to or larger than an inner diameter dimension of the other axial end face of the outer ring in contact with the counterbore-opposite-side peripheral component.

2. The bearing device according to claim 1,
wherein the inner peripheral surface of the outer ring has a groove shoulder formed at the other axial side of the outer ring raceway groove, and
wherein the inner diameter dimension of the other axial end face of the outer ring is defined by a uniform inner diameter dimension of the groove shoulder.

3. The bearing device according to claim 1 or 2 further comprising an inner ring-side peripheral component which is arranged to be adjacent to the inner ring at the other axial side,
wherein the inner ring-side peripheral component has a tapered outer peripheral surface which faces the tapered surface of the counterbore-opposite-side peripheral component and which forms a labyrinth between the tapered surface of the counterbore-opposite-side peripheral component and the tapered outer peripheral surface.

4. The bearing device according to any one of claims 1 to 3 further comprising a counterbore-side peripheral component which is arranged to be adjacent to the outer ring at a counterbore-side,
wherein the counterbore has an inclined surface of which a diameter gradually increases toward one axial end face of the outer ring,
wherein the counterbore-side peripheral component has a cutout which is formed in the radial direction at an axial end face in contact with the outer ring, and
wherein an inner diameter dimension of the axial end face of the counterbore-side peripheral component is equal to or larger than an inner diameter dimension of the one axial end face of the outer ring in contact with the counterbore-side peripheral component.

5. A bearing device comprising:
a rolling bearing comprising: an inner ring having an inner ring raceway groove formed in an outer peripheral surface; an outer ring having an outer ring raceway groove formed in an inner peripheral surface and a counterbore formed at one axial side of the outer ring raceway groove; and a plurality of rolling elements arranged rollably between the inner ring raceway groove and the outer ring raceway groove, wherein the outer ring has at least one supply hole which penetrates from an outer peripheral surface thereof to the inner peripheral surface thereof in a radial direction and which is configured to supply lubricating oil, and wherein the rolling bearing is lubricated by the lubricating oil; and
a counterbore-side peripheral component which is arranged to be adjacent to the outer ring at a counterbore-side,
wherein the counterbore has an inclined surface of which a diameter gradually increases toward one axial end face of the outer ring,
wherein the counterbore-side peripheral component has a cutout which is formed in the radial direction at an axial end face in contact with the outer ring, and
wherein an inner diameter dimension of the axial end face of the counterbore-side peripheral component is equal to or larger than an inner diameter dimension of the one axial end face of the outer ring in contact with the counterbore-side peripheral component.

6. A spindle device for machine tool comprising the bearing device according to any one of claims 1 to 5.
